# EUROPEAN PATENT APPLICATION

(11) **EP 4 130 614 A1**
(43) Date of publication of application: **08.02.2023**
(21) Application number: 21902140.9
(22) Date of filing: 18.09.2021
(51) Int. Cl.: F25B 43/02

(54) **OIL SEPARATOR AND OUTDOOR UNIT OF AIR CONDITIONER**

(30) Priority: 08.12.2020 CN 202011423956
(71) Applicant: HEFEI MIDEA HEATING & VENTILATING EQUIPMENT CO., LTD., Boyan Science Park, High-Tech Zone, Hefei Anhui 230000 (CN); GD Midea Heating & Ventilating Equipment Co., Ltd., Foshan, Guangdong 528000 (CN)
(72) Inventor: YAN, Libo, Hefei, Anhui 230000 (CN); MA, Huanqiao, Hefei, Anhui 230000 (CN); ZHANG, Tiegang, Hefei, Anhui 230000 (CN); LI, Zhongzhen, Hefei, Anhui 230000 (CN); CUI, Yuanbo, Hefei, Anhui 230000 (CN)
(74) Representative: RGTH
(86) International application number: PCT/CN2021/119363
(87) International publication number: WO 2022/121432

(57) **Abstract**

The present disclosure belongs to the technical field of air conditioners, and particularly relates to an oil separator and an outdoor unit of an air conditioner. The oil separator comprises a tank body, an inlet pipe, a gas outlet pipe and a separating member, the lower end of the tank body being provided with an oil outlet, the inlet pipe being connected to the tank body, the central line of the inlet pipe being parallel to a horizontal direction, the gas outlet pipe being connected to the upper end of the tank body, at least a part of the gas outlet pipe extending into the tank body, the separating member being arranged inside the tank body and spaced apart from the tank body, and a plurality of separating holes being provided in the separating member at intervals, wherein the tank body has an axial surface, the central line of the inlet pipe is eccentrically arranged relative to the axial surface, and the whole inlet pipe is positioned at one side of the axial surface. According to the oil separator in embodiments of the present disclosure, a mixture has a tangential speed and rotates in the tank body, oil-gas separation is realized by means of a centrifugal force, and the kinetic energy loss is reduced. The inlet pipe is parallel to the horizontal direction so as to prevent unnecessary collisions between the mixture and the upper end of the tank body, and to allow sufficient time for the mixture to be separated.

## Description

### CROSS REFERENCE TO RELATED APPLICATION

This application claims priority to Chinese Patent Application Serial No. 202011423956.4, entitled "oil separator and outdoor unit for air conditioner" and filed with National Intellectual Property Administration of PRC on December 8, 2020, the entire content of which is incorporated herein by reference.

### FIELD

The present disclosure belongs to a field of air conditioning technologies, and more particularly to an oil separator and an outdoor unit for an air conditioner.

### BACKGROUND

The present section merely provides background information related to the present disclosure, which is not necessarily the prior art.

The air conditioner is a device that makes the refrigerant in its interior to perform a refrigeration cycle comprised of a compression process, a condensation process, an expansion process and an evaporation process. In the air conditioner, the refrigerant becomes a high-temperature and high-pressure state after compression, releases heat towards the outside in a condensor, its temperature and pressure are significantly reduced when flowing through expansion valve, the low-temperature and low-pressure refrigerant then absorbs heat when flowing through an evaporator, and finally flow back to a compressor. The compression process, the condensation process and the expansion process are carried out in an outdoor unit for the air conditioner, while the evaporation process is carried out under the action of the fan and evaporator in an indoor unit.

In the refrigeration system of the air conditioner, the compressor needs lubrication oil for normal operation, but the exhaust of the compressor is mixed with the lubrication oil. Hence, an oil separator is generally arranged between the exhaust port of the compressor and the condensor, to separate the oil in the high-pressure gas discharged from the compressor. Thus, the lubrication oil can return to the compressor to guarantee its normal operation, to avoid lack of oil of the compressor. Meanwhile, excessive oil is prevented from entering the condensor and the evaporator, affecting heat exchange efficiency.

In the related art, in order to enhance the separation effect, a filter screen will be installed in the oil separator, resulting in a large volume of the oil separator. Since filtration holes of the filter screen is too dense, the pressure drop during the separation is too large, affecting separation efficiency.

### SUMMARY

A purpose of the present disclosure is to at least solve problems in the related art of excessive pressure drop and low separation efficiency of an oil separator due to provision of a filter screen. The purpose is realized by the following technical solutions.

A first aspect of the present disclosure proposes an oil separator, including:
a tank having a lower end, wherein the lower end being provided with an oil outlet;
an inlet pipe coupled to the tank;
a gas outlet pipe coupled to an upper end of the tank, and at least a part of the gas outlet pipe extending into the tank; and
a separation member arranged in the tank, wherein a gap is defined between the separation member and the tank, the separation member being provided with a plurality of separation holes at an interval,
wherein the tank has an axial plane, wherein the axial plane is a plane passing through a central axis of the tank, the centerline of the inlet pipe is eccentrically arranged relative to the axial plane, and the inlet pipe is entirely located at a side of the axial plane.

Compared to conventional oil separators, the oil separator according to embodiments of the present disclosure changes a flow direction of a mixture formed by lubrication oil and exhaust and makes it have a tangential velocity, such that the mixture can rotate within the tank and separation of oil and gas can be realized by centrifugal force; furthermore, by providing the tangential velocity for the mixture, direct collision between the mixture and the tank is avoided, kinetic energy loss is reduced, separation speed is accelerated, and separation effect is improved. The centerline of the inlet pipe 1 is eccentrically arranged relative to the axial plane. That is, there is a spacing between the mixture and the axial plane when the mixture entering the tank, which lengthens a path of separation and prolong the time for the mixture to rotate in the tank, further improving the separation effect. The present application cancels the provision of a filter screen, and separation of oil and gas is realized by rotational movement after the mixture entering the tank, with small pressure drop. When the inlet pipe is coupled to a side face of the tank, the inlet pipe may be parallel to the horizontal direction, or the inlet pipe may be inclined upwards or downwards relative to the horizontal direction. In one embodiment, the inlet pipe is parallel to the horizontal direction. On the one hand, it can avoid unnecessary collision between the upper end of the tank and the mixture flowing out along the inlet pipe inclined upwards; on the other hand, it can avoid low separation efficiency due to insufficient separation time caused by accelerated flow of the mixture to the oil outlet through the inlet pipe inclined downwards along which the mixture flows out. Therefore, it is finally chosen that the inlet pipe is arranged parallel to the horizontal direction, such that the separation time of the mixture in the tank is long enough, improving separation effect.

In some embodiments of the present disclosure, the separation member is arranged between the inlet pipe and a lower end of the gas outlet pipe along an axial direction of the tank.

In some embodiments of the present disclosure, the separation member is sleeved over the gas outlet pipe; and
along the axial direction of the tank, the lower end of the gas outlet pipe is lower than the inlet pipe, a separation channel is defined between the part of the gas outlet pipe extending into the tank and the tank, and the inlet pipe is in communication with the separation channel.

In some embodiments of the present disclosure, a ratio of an axial distance between the inlet pipe and the gas outlet pipe to a radial size of the tank is greater than or equal to 0.5.

In some embodiments of the present disclosure, an outer wall of the separation member is partially coupled to an inner wall of the tank; and
along the axial direction of the tank, the lower end of the gas outlet pipe is higher than the inlet pipe.

In some embodiments of the present disclosure, a ratio of an axial distance between the inlet pipe and the oil outlet to a radial size of the tank is greater than or equal to 0.2, and a ratio of an axial distance between the gas outlet pipe and the inlet pipe to the radial size of the tank is greater than or equal to 0.5.

In some embodiments of the present disclosure, the plurality of separation holes are defined on the separation member at uniform intervals.

In some embodiments of the present disclosure, observing along axial projection of the tank, an end of the inlet pipe coupled to the tank is located on an inner wall of the tank or located outside the inner wall of the tank.

In some embodiments of the present disclosure, an inner wall of the inlet pipe is tangent to an inner wall of the tank.

A second aspect of the present disclosure proposes an outdoor unit for an air conditioner, including:
a compressor;
an oil separator according to any one of above technical solutions, the oil separator being coupled downstream of the compressor.

The outdoor unit for the air conditioner of embodiments of the present disclosure has the same beneficial effects as the oil separator of the above-described embodiments, which are not repeated herein.

### BRIEF DESCRIPTION OF THE DRAWINGS

By reading the following detailed description of preferred implementations, various other advantages and benefits will become clear for those having ordinary skill in the art. The accompanying drawings are only for purpose of illustrating preferred implementations, and should not be regarded as limitation to the present disclosure. Moreover, throughout the accompanying drawings, the same components are denoted by the same reference numerals. In which:
FIG. 1 is a schematic view of an oil separator according to an embodiment of the present disclosure;
FIG. 2 is a top view of the structure illustrated in FIG. 1;
FIG. 3 is a schematic view of an oil separator according to another embodiment of the present disclosure;
FIG. 4 is a top view of the structure illustrated in FIG. 3;
FIG. 5 is a schematic view of an embodiment of a separation member illustrated in FIGS. 1 to 4;
FIG. 6 is a schematic view of another embodiment of a separation member illustrated in FIGS. 1 to 4;
FIG. 7 is a schematic view of an oil separator according to another embodiment of the present disclosure;
FIG. 8 is a schematic view of an oil separator according to another embodiment of the present disclosure;
FIG. 9 is a schematic view of an embodiment of a separation member illustrated in FIGS. 7 to 8;
FIG. 10 is a schematic view of another embodiment of a separation member illustrated in FIGS. 7 to 8;
FIG. 11 is a schematic view of a coupling manner of an inlet pipe and a tank according to an embodiment of the present disclosure; and
FIG. 12 is a schematic view of another coupling manner of an inlet pipe and a tank according to an embodiment of the present disclosure.

The reference numerals in the accompanying drawings are listed below:
1, inlet pipe; 11, coupling portion;
2, tank;
3, gas outlet pipe;
4, oil outlet pipe;
5, axial plane;
6, separation member; 61 separation hole.

### BRIEF DESCRIPTION OF THE DRAWINGS

Example implementations of the present disclosure will be described in detail below with reference to the accompanying drawings. Although the accompanying drawings show the example implementations of the present disclosure, it should be understood that, the present disclosure may be realized in various forms and should not be limited to the implementations set forth herein. On the contrary, these implementations are provided for more thorough understanding of the present disclosure, to completely convey the scope of the present disclosure to a person skilled in the art.

It should be understood that, terms used herein are only for purpose of describing particular example implementations, and not intended to limit. Unless otherwise specified explicitly in the context, the singular forms "a", "one" and "the" used herein may also include the plural forms. The terms "include", "encompass", "contain", and "have" are inclusive, and thus indicate presence of stated feature, step, operation, element and/or component, and do not exclude presence or addition of one or more other features, steps, operations, elements, components, and/or combination thereof.

Although terms such as first, second, third may be used herein to describe a plurality of elements, components, regions, layers and/or sections, these elements, components, regions, layers and/or sections should not be limited by these terms. These terms may only be used to distinguish one element, component, region, layer, or section from another region, layer, or section. Unless specified explicitly in the context, terms such as "first", "second" and other numerical terms used herein do not imply order or sequence. Therefore, the first element, component, region, layer or section discussed below may be referred to as second element, component, region, layer, or section without departing from teaching of the example implementation.

For convenience of description, spatial relativity terms may be used herein to describe relationship of one element or feature relative to another element or feature as illustrated in the figures. For example, these relativity terms are "interior", "exterior", "inside", "outside", "on bottom of", "below", "on top of", "above", etc. These spatial relativity terms are intended to include different orientations during use or operation of the device in addition to the orientations depicted in the figures. For example, if the device in the figure is flipped over, then the element described as being on bottom of other elements or features or below other elements or features is then oriented as being on top of other elements or features or above other elements or features. Hence, example term "below" may include up and down orientations. The device may be oriented otherwise (rotated by 90 degrees or in other directions) and the spatial relativity relationship description used herein is explained accordingly.

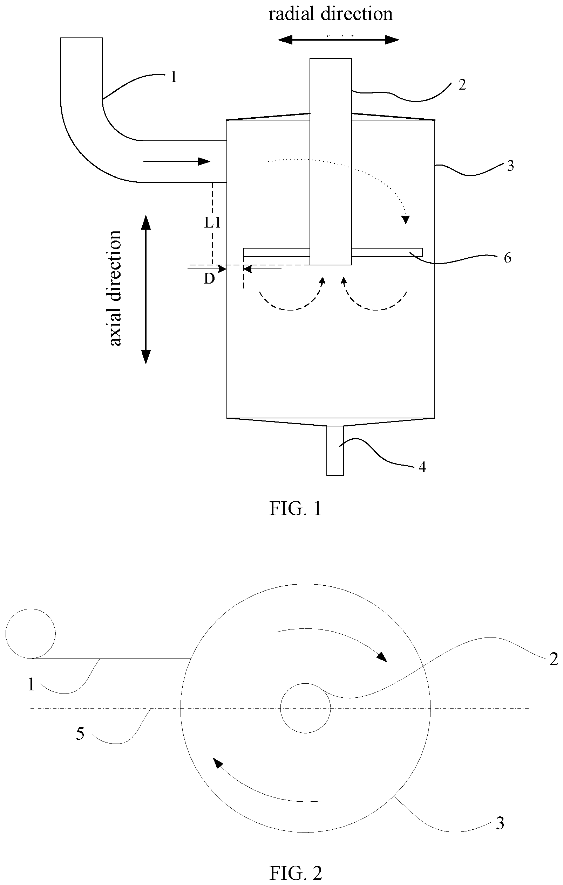

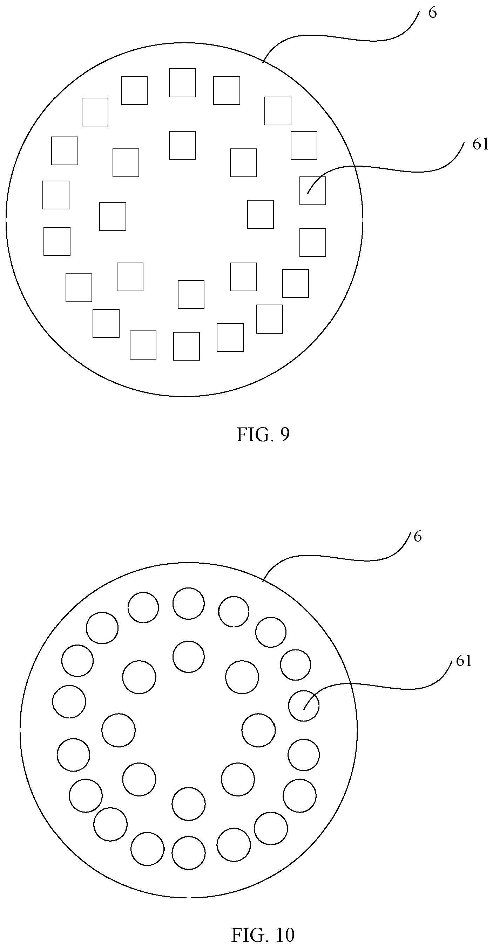

As illustrated in FIGS. 1 to 12, an oil separator according to an embodiment of the present disclosure includes:
a tank 2 having a lower end provided with an oil outlet;
an inlet pipe 1 coupled to the tank 2, the inlet pipe having a centerline parallel to a horizontal direction;
a gas outlet pipe 3 connected to an upper end of the tank 2, and at least a part of the gas outlet pipe 3 extending into the tank 2; and
a separation member 6 arranged in the tank 2, the separation member and the tank 2 define a gap therebetween, and the separation member 6 being provided with a plurality of separation holes 61 at intervals,
in which the tank 2 has an axial plane 5, the axial plane 5 is a plane passing through a central axis of the tank 2, the centerline of the inlet pipe 1 is eccentrically arranged relative to the axial plane 5, and the inlet pipe 1 is entirely located at a side of the axial plane 5.

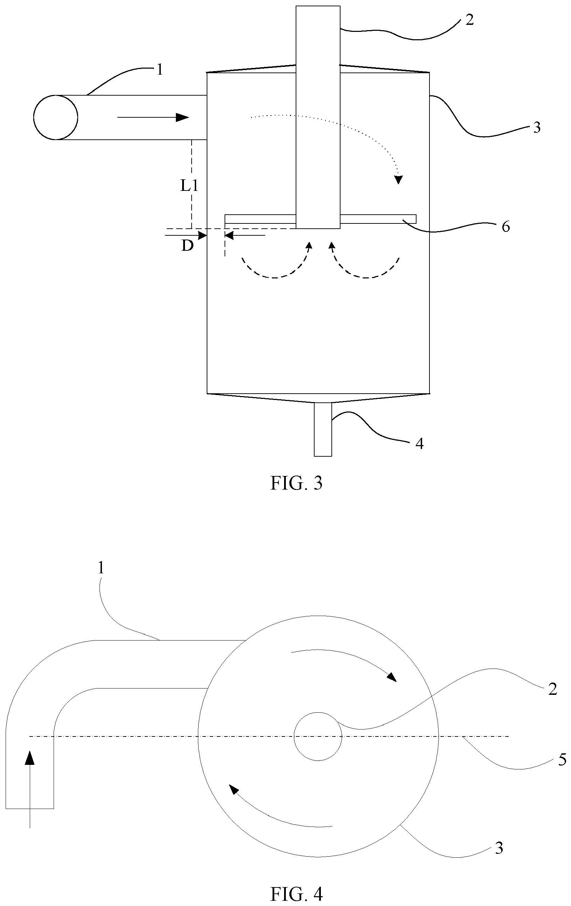

Compared to conventional oil separators, the oil separator according to embodiments of the present disclosure changes a flow direction of a mixture formed by lubrication oil and exhaust and makes it have a tangential velocity, such that the mixture can rotate in the tank 2 and separation of oil and gas can be realized by centrifugal force; furthermore, by providing the tangential velocity for the mixture, direct collision between the mixture and the tank 2 is avoided, kinetic energy loss is reduced, separation speed is accelerated, and separation effect is improved. The centerline of the inlet pipe 1 is eccentrically arranged relative to the axial plane 5. That is, there is a certain spacing between the mixture and the axial plane 5 when the mixture entering the tank 2, which lengthens a path of separation and prolong the time for the mixture to rotate in the tank 2, further improving the separation effect. The present application cancels the provision of a filter screen and replaces it with the separation member 6 of a plate-like structure. The separation member 6 is provided with separation holes 61 at intervals, and realizes separation of oil and gas by rotational movement after the mixture entering the tank 2, with small pressure drop. The tank 2 as a whole has a cylinder structure which includes an axial direction and a radial direction. A direction pointing from the oil outlet to the gas outlet pipe 3 is the axial direction, and the axial direction is parallel to a vertical direction. A direction perpendicular to the axial direction is the radial direction, and the radial direction is parallel to a horizontal direction. An interior of the tank 2 defines an accommodating chamber. When the inlet pipe 1 is coupled to a side face of the tank 2, the inlet pipe may be parallel to the radial direction of the tank 2 (the horizontal direction), or the inlet pipe may be inclined upwards or downwards relative to the radial direction of the tank 2 (the horizontal direction). In one embodiment, the inlet pipe 1 is parallel to the radial direction of the tank 2 (the horizontal direction). On the one hand, it can avoid unnecessary collision between the upper end of the tank 2 and the mixture flowing out along the inlet pipe 1 inclined upwards; on the other hand, it can avoid low separation efficiency due to insufficient separation time caused by accelerated flow of the mixture to the oil outlet through the inlet pipe 1 inclined downwards along which the mixture flows out. Therefore, it is finally chosen that the inlet pipe 1 is arranged parallel to the radial direction of the tank 2 (the horizontal direction), such that the separation time of the mixture in the tank 2 is long enough, improving separation effect. The inlet pipe 1 being parallel to the radial direction of the tank 2, indicated herein, does not mean that the entire inlet pipe 1 is parallel to the radial direction of the tank 2, and it is only necessary to ensure that a part of the inlet pipe 1 close to tank 2 and coupled to tank 2 is parallel to the radial direction. The remaining part may be adjusted adaptively according to arrangement position of an upstream component of the oil separator. For example, the inlet pipe 1 includes a first part and a second part. The first part is coupled to an upstream component compressor, the second part is coupled to the tank 2, and the first part and the second part are coupled by arc transition. It is only necessary to ensure that the second part is parallel to the radial direction of the tank 2. An angle between the first part and the second part may be an acute angle, a right angle or an obtuse angle, and the bending direction may be upward, downward, leftward, rightward, etc. As illustrated in FIGS. 1, 2, 7 and 8, a part of the inlet pipe 1 is parallel to the radial direction of the tank 2, and another part is bent upwards. As illustrated in FIGS. 3 and 4, a part of the inlet pipe 1 is parallel to the radial direction of the tank 2, and another part is bent leftwards or rightwards along the horizontal direction. In the process of the separation of oil and gas, oil will adhere to an inner wall of the tank 2, and gather and flow to the oil outlet along the inner wall. In order to enable the oil to flow to the oil outlet smoothly, a gap D is defined between the separation member 6 and the inner wall, to avoid interception of the oil by the separation member 6.

It should be noted that in other embodiments, the gas outlet pipe 3 may also be coupled to the side face of the tank 2. The gas has a density less than a density of the lubrication oil and will flow upwards, thus, the gas outlet pipe 3 is coupled to the upper end of the tank 2 to discharge the gas better. The inlet pipe 1 may be coupled to the side face, the upper end or the lower end of the tank 2, and an end of the inlet pipe 1 may be coupled on the tank 2 or extend into the interior of the tank 2. In order to realize provision of tangential velocity for the oil-gas mixture, there are some manners as follows. First, the inlet pipe 1 extends into the interior of the tank 2 from the lower end, the centerline of the inlet pipe 1 is eccentrically arranged relative to the axial plane 5, the centerline of the inlet pipe 1 is parallel to the axial plane 5, an arc-shaped guide plate is arranged at the end of the inlet pipe 1, and the arc shape reduces collision between the mixture and the guide plate to enable the mixture to enter the tank 2 smoothly. Second, the inlet pipe 1 extends into the interior of the tank 2 from the lower end, the centerline of the inlet pipe 1 is eccentrically arranged relative to the axial plane 5, the centerline of the inlet pipe 1 is parallel to the axial plane 5, the arc-shaped guide plate is arranged in the tank 2, and the arc shape reduces the collision between the mixture and the guide plate to enable the mixture to enter the tank 2 smoothly. Third, the inlet pipe 1 extends into the interior of the tank 2 from the lower end, the structure of the inlet pipe 1 is changed, the end of the inlet pipe 1 is bent towards the axial plane 5 of the tank 2, the centerline of the inlet pipe 1 gradually intersects with the axial plane 5 from separation to make the mixture flowing out of the inlet pipe 1 have a velocity direction; the mixture enters the tank 2 from the inlet pipe 1, the mixture flows along the bent end of the inlet pipe 1, the mixture have had a velocity direction after flowing out of the inlet pipe 1, and the mixture maintains the velocity direction and enters the tank 2 to continue flowing. Fourth, the inlet pipe 1 is coupled to the side face of the tank 2 with a part extending into the interior of the tank 2, the structure of the inlet pipe 1 is changed, the end of the inlet pipe 1 is bent towards the axial plane 5 of the tank 2, the centerline of the inlet pipe 1 gradually intersects with the axial plane 5 from separation to make the mixture flowing out of the inlet pipe 1 have a velocity direction; the mixture enters the tank 2 from the inlet pipe 1, the mixture flows along the bent end of the inlet pipe 1, the mixture have had a velocity direction after flowing out of the inlet pipe 1, and the mixture maintains the velocity direction and enters the tank 2 to continue flowing. Fifth, the inlet pipe 1 is coupled to the side face of the tank 2, the centerline of the inlet pipe 1 is eccentrically arranged relative to the axial plane 5, the centerline of the inlet pipe 1 is parallel to the axial plane 5, and the inlet pipe 1 is entirely located at a side of the axial plane 5; the eccentric distance guides the mixture flowing out of the inlet pipe 1 to flow along the tank 2 and reduces the collision between the mixture and the tank 2, to enable the mixture to enter the tank 2 smoothly. Sixth, combinations of above several manners. The above manners are only used as examples, and do not limit the manners of the present application that provide tangential velocity for the mixture. Hereinafter, the fifth manner of providing the tangential velocity is taken as an example for illustration.

In some embodiments of the present disclosure, a general shape of the separation member 6 may be a flat plate shape or an arc plate shape. When the separation member 6 has the flat plate shape, it may be parallel to the horizontal direction, and it may also be inclined upwards or downwards relative to the horizontal direction. When the separation member 6 has the arc plate shape, it may be bent upwards or downwards. In one embodiment, the separation member 6 employs the flat plate shape, and the separation member 6 is parallel to the horizontal direction. Compared to the separation member 6 of arc plate shape, when the mixture enters the tank 2 and passes through the separation member 6 it has a smaller change in terms of height in the vertical direction, which prevents the mixture from sliding along a surface inclined relative to the horizontal direction, reduces friction force between the mixture and the separation member 6, and further reduces pressure drop and energy loss.

In some embodiments of the present disclosure, the separation member 6 may be coupled to the inner wall of the tank 2, or may be coupled to the gas outlet pipe 3. Along the axial direction of the tank 2, the separation member 6 is arranged between the inlet pipe 1 and the lower end of the gas outlet pipe 3. The mixture flows out of the inlet pipe 1 and enters the tank 2, the mixture collides with the separation member 6, and the oil adheres to the separation member 6, gathers and drips, and flows out of the oil outlet; and the oil and the gas are separated by the separation member 6, and the gas is discharged from the gas outlet pipe 3. The separation member 6 is arranged between the inlet pipe 1 and the gas outlet pipe 3, such that the mixture is separated in advance and the mixture is prevented from entering the exhaust pipe directly, to improve the separation efficiency of the mixture.

In some embodiments of the present disclosure, in one embodiment, the separation member 6 is sleeved over the gas outlet pipe 3. In the process of the separation of the oil and gas, the oil will adhere to an inner wall of the tank 2, and gather and flow to the oil outlet along the inner wall. In order to enable the oil to flow to the oil outlet smoothly, a gap D is defined between the separation member 6 and the inner wall, to avoid interception of the oil by the separation member 6. The oil separator is mounted in an outdoor unit for an air conditioner, and a size of the oil separator will affect a size of the outdoor unit for the air conditioner. Hence, the size of the accommodating chamber defined by the tank 2 needs to be fully utilized, and the separation effect needs to be improved in a limited space. According to the foregoing, as illustrated in FIGS. 1 to 4, the inlet pipe 1 is coupled to the side face of the tank 2, the gas outlet pipe 3 is coupled to the upper end of the tank 2. If the mixture is to remain in the tank 2 for enough time to be separated, it is necessary to arrange the position where the mixture enters the tank 2 as close to the upper end of the tank 2 as possible. At least a part of the gas outlet pipe 3 extends into the interior of the tank 2, and the inner wall of the tank 2 and the outer wall of the gas outlet pipe 3 define a cyclone separation channel. The mixture enters the cyclone separation channel and flows along the inner wall of the tank 2 and the outer wall of the gas outlet pipe 3, and under the action of dead weight of the oil and the gas, the oil drips downwards to the oil outlet, and the gas enters the gas outlet pipe 3 and is discharged, realizing the separation of oil and gas. When the mixture flows in the cyclone separation channel, the inner wall of the tank 2 and the outer wall of the gas outlet pipe 3 restrict the flow direction of the mixture, such that the mixture with a tangential velocity stays in the tank 2 long enough, further improving the separation effect. The size of the part of the gas outlet pipe 3 extending into the tank 2 is related to the size of the formed cyclone separation channel. Hence, in the case of limited space, the lower end of the gas outlet pipe 3 is arranged lower than the inlet pipe 1 to increase the size of the cyclone separation channel. Furthermore, in the axial direction of the tank 2, a ratio of an axial distance L1 between the inlet pipe 1 and the gas outlet pipe 3 to a radial size of the tank 2 is greater than or equal to 0.5.

A coupling hole is defined on a middle region of the separation member 6, and the coupling hole has a profile similar to an outer profile of the gas outlet pipe 3, to facilitate mounting and positioning of the separation member 6 and the gas outlet pipe 3. The coupling of the separation member 6 and the gas outlet pipe 3 may be a detachable coupling by a screw, a pin or a thread, to facilitate replacement and maintenance of the separation member 6. The coupling of the separation member 6 and the gas outlet pipe 3 may also be an undetachable coupling by gluing, welding or integrated processing, to avoid separation of them due to vibration of the outdoor unit after long-term use. In order to facilitate processing and manufacturing, the separation member 6 and the gas outlet pipe 3 are processed as two parts. The middle region of the separation member 6 defines the coupling hole, and the separation member 6 is fitted over the gas outlet pipe 3 through the coupling hole. The axial size of the tank 2 is 150mm, and an axial distance between a centerline of the end of the inlet pipe 1 coupled to the tank 2 and the upper end of the tank 2 is 45mm.

In some embodiments of the present disclosure, a shape of the cyclone separation channel determines flow velocity of the mixture, the outer wall of the gas outlet pipe 3 is configured as an arc-shaped face, the inner wall of the tank 2 is configured as an arc-shaped face to reduce collision of the mixture with the tank 2 and the gas outlet pipe 3. Radii of the arc-shaped faces of the tank 2 and the gas outlet pipe 3 may be the same or different. The arc-shaped face of the tank 2 may be an arc-shaped face with an equal radius everywhere, or an arc-shaped face spiced by different radii. The arc-shaped face of the gas outlet pipe 3 may be an arc-shaped face with an equal radius everywhere, or an arc-shaped face spiced by different radii. As illustrated in FIGS. 2 and 4, in one embodiment, the outer wall of the gas outlet pipe 3 has an equal radius everywhere, the inner wall of the tank 2 has an equal radius everywhere, and the gas outlet pipe 3 and the tank 2 are arranged concentrically. The cyclone separation channel formed by the gas outlet pipe 3 and the tank 2 has a shape more akin to a regular annular channel, to further reduce the collision of the mixture with the tank 2 and the gas outlet pipe 3 and reduce the kinetic energy loss.

In some embodiments of the present utility model, according to the forgoing, the centerline of the inlet pipe 1 is eccentrically arranged relative to the axial plane 5, and the distance between the centerline of the inlet pipe 1 and the axial plane 5 is equal everywhere. That is to say, the centerline of the inlet pipe 1 is parallel to the axial plane 5, and the inlet pipe 1 is entirely located at a side of the axial plane 5. The distance between the centerline of the inlet pipe 1 and the axial plane 5 is greater than zero, and a limiting position between the centerline of the inlet pipe 1 and the axial plane is where the inner wall of the inlet pipe 1 tangent to the inner wall of the tank 2, such that the mixture flowing out along the inner wall of the inlet pipe 1 can directly transition to continue flowing along the inner wall of the tank 2, to further reduce kinetic energy loss.

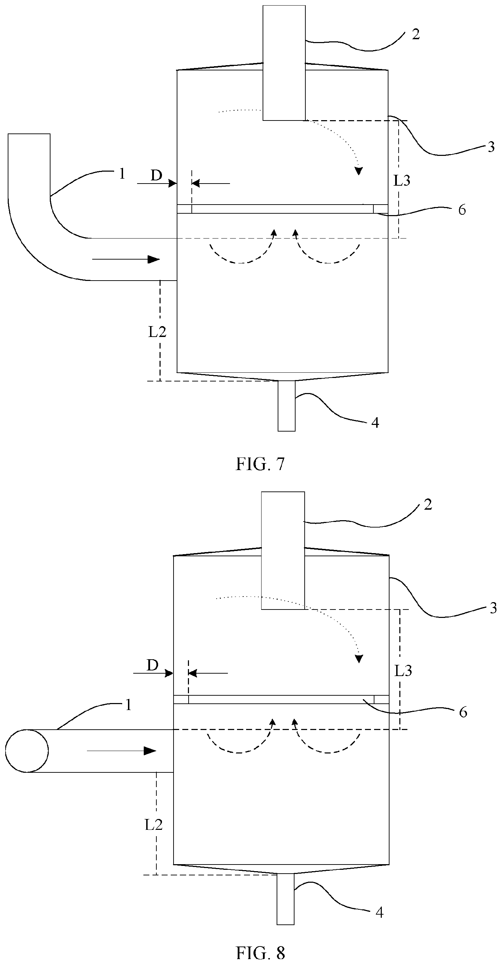

In some embodiments of the present disclosure, according to the forgoing, the lower end of the gas outlet pipe 3 is lower than the inlet pipe 1. In other embodiments, as illustrated in FIGS. 7 to 8, along the axial direction of the tank 2, the lower end of the gas outlet pipe 3 may be arranged to be higher than the inlet pipe 1. In this situation, if the size of the gas outlet pipe 3 extending into the tank 2 needs to be reduced, the part of the gas outlet pipe 3 located in the interior of the tank 2 and the separation member 6 need to be arranged as close to the upper end of the tank 2 as possible, such that separated gas can be discharged from the gas outlet pipe 3 immediately. The inlet pipe 1 is coupled to the side face of the tank 2, the position of the inlet pipe 1 may be close to the upper end or the lower end of the tank 2, or may be arranged at the middle region of the tank 2. In one embodiment, the position of the inlet pipe 1 is arranged at the middle region of the tank 2. However, an axial distance of the inlet pipe 1 and the gas outlet pipe 3 and an axial distance of the inlet pipe 1 and the oil outlet may influence stay time and separation effect of the mixture in the tank 2. After several experiments, a ratio of the axial distance L2 between the inlet pipe 1 and the oil outlet to the radial size of the tank 2 is set to be greater than or equal to 0.2. That is to say, a certain spacing should be kept between the inlet pipe 1 and the oil outlet such that after entering the tank 2, the mixture perform rotational movement in a region between the inlet pipe 1 and the oil outlet to realize the separation of oil and gas. A ratio of the axial distance L3 between the gas outlet pipe 3 and the inlet pipe 1 to the radial size of the tank 2 is greater than or equal to 0.5. After entering the tank 2, the mixture comes into contact with the inner wall of the tank 2 and flows along the inner wall of the tank 2, and there is an axial distance between the gas outlet pipe 3 and the inlet pipe 1, which reduces the amount of the oil adhered to the exhaust pipe and renders the lubrication oil to flow out of the oil outlet as much as possible. The separation member 6 is coupled to the inner wall of the tank 2 and is not coupled to the gas outlet pipe 3, and a gap D is defined between the separation member 6 and the inner wall, such that the oil can flow to the oil outlet smoothly, to avoid interception of the oil by the separation member 6. As illustrated in FIGS. 7 to 10, when the separation member 6 is coupled to the inner wall of the tank 2, the gas outlet pipe 3 is projected towards the separation member 6 along the axial direction, and the projection region formed on the separation member 6 needs to be configured to be a solid structure, which prevents the mixture from directly passing through the projection region and entering the gas outlet pipe 3, and ensures that the mixture collides with the region of the separation member 6 provided with the separation holes 61 to realize the separation of oil and gas, the oil gathers and falls to the oil outlet, and the gas is discharged from the gas outlet pipe 3.

The gap D between the separation member 6 and the tank 2 may be a complete ringshaped gap, and fixation of the separation member 6 is realized by utilizing an auxiliary rod, or the like; or, the separation member 6 may be coupled to the inner wall of the tank 2 directly, and at least two coupling points are formed between the separation member 6 and the inner wall of the tank 2. That is to say, at least two gaps are defined. The differences from the previous embodiment only reside in that the relative positions of the inlet pipe 1, the gas outlet pipe 3 and the separation member 6 are different; the axial size of the tank 2 is 150mm, and the axial distance between the centerline of the end of the inlet pipe 1 coupled to the tank 2 and the upper end of the tank 2 is 85mm. The remaining is the same as the previous embodiment.

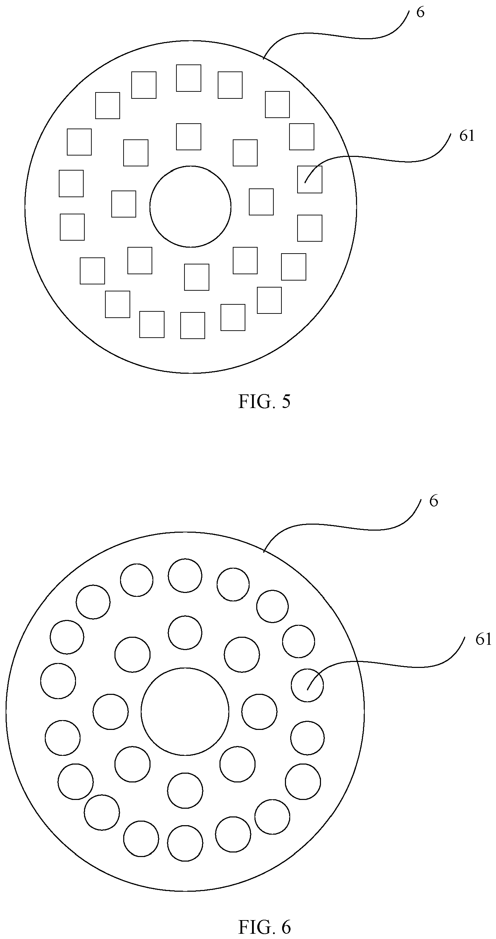

In some embodiments of the present disclosure, as illustrated in FIGS. 5, 6, 9 and 10, the separation member 6 has a plate-like structure of a certain thickness. That is to say, the separation hole 61 has a certain length in the axial direction. Arrangement positions of the plurality of separation holes 61 may be at uniform intervals relative to one another, or the density of the separation holes 61 at different positions may be adjusted according to contact position of the separation member 6 with the mixture. The size of the separation hole 61 may be determined according to several tests. A profile of a section of the separation hole 61 in the radial direction may be rectangle, circle, ellipse or other regular geometrical shapes, and a section of the separation hole 61 in the axial direction may be rectangle, circle, cone or other geometrical shapes; or the section of the separation hole 61 in the radial direction and the section of the separation hole in the axial direction may also be configured to be irregular patterns, to increase contact area between the mixture and the separation holes 61, enhance collision between the mixture and separation holes 61 and further improve the separation effect. In one embodiment, the separation holes 61 are defined in the separation member 6 at uniform intervals relative to one another. On the one hand, the mold design is facilitated; on the other hand, the different regions of the separation member 61 have the same separation effect on the mixture.

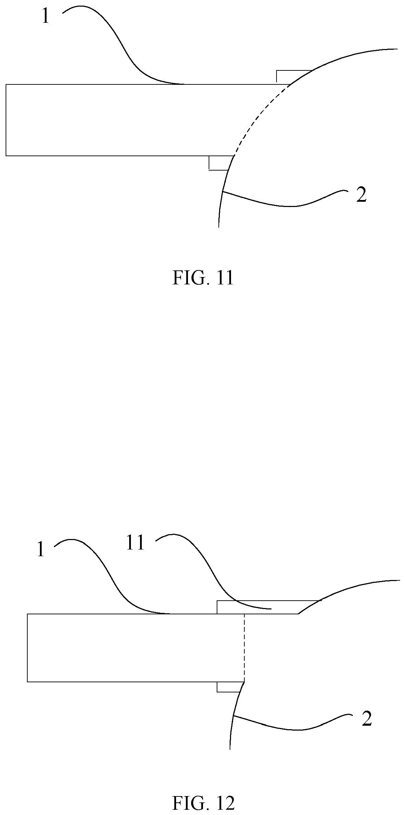

In some embodiments of the present disclosure, the coupling between the inlet pipe 1 and the tank 2 is the undetachable coupling, and may be integrated manufacturing, welding or gluing. The employment of the undetachable coupling avoids failure of the coupling between the inlet pipe 1 and the tank 2 due to vibration result from operation of the outdoor unit for the air conditioner. As illustrated in FIG. 11, the inlet pipe 1 and the tank 2 may be that the end of the inlet pipe 1 is coupled to the inner wall of the tank 2, and along axial projection of the tank 2, the end of the inlet pipe 1 coupled to the tank 2 is located on the inner wall of the tank 2. As illustrated in FIG. 12, it may also be that a coupling portion 11 is machined on the outer wall of the tank 2, the outer wall of the tank 2 extends outwards to form the coupling portion 11 of a hollow structure, and along the axial projection of the tank 2, the end of the inlet pipe 1 coupled to the tank 2 is located at an outer side of the inner wall of the tank 2, an inner diameter of the coupling portion 11 is less than or equal to an outer diameter of the inlet pipe 1, the coupling is then realized by welding or gluing process, the inlet pipe 1 does not need to extend into the interior of the tank 2, and the mixture is fully separated by utilizing the space size of the accommodating chamber of the tank 2 as much as possible. At least a part of the gas outlet pipe 3 is located in the tank 2, the coupling between the gas outlet pipe 3 and the tank 2 is also the undetachable coupling, and may be integrated manufacturing, welding or gluing. The employment of the undetachable coupling avoids failure of the coupling between the gas outlet pipe 3 and the tank 2 due to vibration result from operation of the outdoor unit for the air conditioner.

In general, the end of the inlet pipe 1 does not extend into the interior of the tank 2, and the mixture flows out of the inlet pipe 1. As illustrated in FIG. 11, the mixture enters the interior of the tank 2 along the inner wall of the tank 2 for rotation. As illustrated in FIG. 12, the mixture flows out of the inlet pipe 1, continues flowing along the coupling portion 11, and finally enters the interior of the tank 2 along the inner wall of the tank 2 for rotation.

In some embodiments of the present disclosure, in order to facilitate gathering of the separated oil and coupling to a downstream component, the oil separator further includes an oil outlet pipe 4, and the oil outlet pipe 4 is coupled to the oil outlet, as illustrated in FIGS. 1, 3, and 7 to 8. The coupling between the oil outlet pipe 4 and the tank 2 is the undetachable coupling, and may be integrated manufacturing, welding or gluing. The employment of the undetachable coupling avoids failure of the coupling between the oil outlet pipe 4 and the tank 2 due to vibration result from operation of the outdoor unit for the air conditioner.

In some embodiments of the present disclosure, in the process of the mixture entering the tank 2 for separation, there is a situation that the oil is adhered to the inner wall of the tank 2. In order to accelerate flow velocity of the oil towards the oil outlet, as illustrated in FIGS. 1, 3, and 7 to 8, the lower end of the tank 2 is configured as an inclined face which is inclined towards the oil outlet, which utilizes the gravity to accelerate the oil flowing to the oil outlet. Further, the upper end of the tank 2 is configured as an inclined face which is inclined towards the gas outlet pipe 3, and when the oil is adhered to inner wall of the upper end of the tank 2, the inclined face can accelerate flowing and dripping of the oil and accelerate separation speed.

Embodiments of the present application also propose an outdoor unit for an air conditioner, which includes an oil separator, the oil separator is an oil separator according to any one of above-described embodiments.

The outdoor unit for the air conditioner of embodiments of the present application has the same beneficial effects as the oil separator of the above-described embodiments, which are not repeated herein.

The above-described are merely preferred specific implementations of the present disclosure, but the protection scope of the present disclosure is not limited to this. The conceivable change or alternative by those skilled in the art within the technical scope disclosed by the present disclosure should be covered in the protection scope of the present disclosure. Therefore, the protection scope of the present disclosure is subject to the protection scope of the claims.

## Claims

1. An oil separator, comprising:
a tank having a lower end, wherein the lower end being provided with an oil outlet;
an inlet pipe coupled to the tank, wherein the inlet pipe having a centerline parallel to a horizontal direction;
a gas outlet pipe coupled to an upper end of the tank, and at least a part of the gas outlet pipe extending into the tank; and
a separation member arranged in the tank, wherein a gap is defined between the separation member and the tank, the separation member being provided with a plurality of separation holes at an interval,
wherein the tank has an axial plane, wherein the axial plane is a plane passing through a central axis of the tank, the centerline of the inlet pipe is eccentrically arranged relative to the axial plane, and the inlet pipe is entirely located at a side of the axial plane.

2. The oil separator according to claim 1, wherein the separation member is arranged between the inlet pipe and a lower end of the gas outlet pipe along an axial direction of the tank.

3. The oil separator according to claim 2, wherein the separation member is sleeved over the gas outlet pipe; and
along the axial direction of the tank, the lower end of the gas outlet pipe is lower than the inlet pipe, a separation channel is defined between the part of the gas outlet pipe extending into the tank and the tank, and the inlet pipe is in communication with the separation channel.

4. The oil separator according to claim 3, wherein a ratio of an axial distance between the inlet pipe and the gas outlet pipe to a radial size of the tank is greater than or equal to 0.5.

5. The oil separator according to claim 2, wherein an outer wall of the separation member is partially coupled to an inner wall of the tank; and
along the axial direction of the tank, the lower end of the gas outlet pipe is higher than the inlet pipe.

6. The oil separator according to claim 5, wherein a ratio of an axial distance between the inlet pipe and the oil outlet to a radial size of the tank is greater than or equal to 0.2, and a ratio of an axial distance between the gas outlet pipe and the inlet pipe to the radial size of the tank is greater than or equal to 0.5.

7. The oil separator according to any one of claims 1 to 6, wherein the plurality of separation holes are defined on the separation member at a uniform interval.

8. The oil separator according to any one of claims 1 to 6, wherein observing along an axial projection of the tank, an end of the inlet pipe coupled to the tank is located at the inner wall of the tank or located at an outer side of the inner wall of the tank.

9. The oil separator according to any one of claims 1 to 6, wherein an inner wall of the inlet pipe is tangent to the inner wall of the tank.

10. An outdoor unit for an air conditioner, comprising:
a compressor; and
an oil separator according to any one of claims 1 to 9, the oil separator being coupled downstream of the compressor.
